# EUROPÄISCHE PATENTSCHRIFT

(11) **EP 0 651 107 B1**
(45) Veröffentlichungstag und Bekanntmachung des Hinweises auf die Patenterteilung: **02.12.1998**
(21) Anmeldenummer: 94114423.0
(22) Anmeldetag: 14.09.1994
(51) Int. Cl.: E04B 9/00, E04B 9/02, F24D 3/16, F24F 5/00

(54) **Kühldecke**
Cooling ceiling
Plafond réfrigérant

(30) Priorität: 03.11.1993 DE 9316790 U
(43) Veröffentlichungstag der Anmeldung: 03.05.1995
(73) Patentinhaber: Hewing GmbH, D-48607 Ochtrup (DE)
(72) Erfinder: Homm, Karl-Georg, D-45768 Marl (DE); Wittkämper, Michael, D-48683 Ahaus (DE)
(74) Vertreter: Hilleringmann, Jochen, Dipl.-Ing.

(56) Entgegenhaltungen:
- DE-U- 9 116 027
- DE-U- 9 216 792
- DE-U- 9 316 790

## Beschreibung

Die Erfindung betrifft eine Kühldecke zur Raumluftklimatisierung mit einem von Kühlwasser durchströmten Rohrsystem nach dem Oberbegriff des Anspruchs 1.

Bei einer bekannten Kühldecke (DE-GM 92 16 792) sind das Rohrsystem aufnehmende Verbindungsglieder mit einem Traghaken versehen, der in jeweilige Aufnahmeöffnungen am Halteglied so eingehangen wird, daß eine höhenvariable Halterung des Rohrsystems gebildet ist.

Der Erfindung liegt die Aufgabe zugrunde, eine Kühldecke zur Raumluftklimatisierung der eingangs angegebenen Art zu schaffen, deren Verbindungsglieder mit größerer konstruktiver Freiheit und geringem technischen Aufwand an unterschiedliche Halteglieder anpaßbar sind.

Ausgehend von einer Kühldecke nach dem Oberbegriff des Anspruchs 1 löst die Erfindung diese Aufgabe mit den Merkmalen des Anspruchs 1. Hinsichtlich wesentlicher weiterer Ausgestaltungen wird auf die Ansprüche 2 bis 13 verwiesen.

Mit der erfindungsgemäßen Ausgestaltung der Kühldecke mit dem das Halteglied frei übergreifenden Haltebügel ist ein Bauteil geschaffen, das mit geringem Montageaufwand auf das in der Einbaulage befindliche Halteglied auflegbar und mit den Kühlrohren des Rohrsystems in Rastarretierung verbindbar ist. Damit können einerseits für eine Erstmontage des Deckenaufbaus die Halteglieder konstruktiv vereinfacht und andererseits bei einer nachträglichen Installation der Kühlrohre an einer vorhandenen Deckenverkleidung die daran befindlichen Halteglieder ohne zusätzliche Hilfsmittel mit dem Haltebügel komplettiert werden. Nach der Verlegung des Rohrsystems und der anschließenden Montage der Deckenelemente liegen die Kühlrohre in ihrer Einbaulage so auf den Deckenelementen auf, daß die Haltebügel entlastet sind.

Die Haltebügel können mit geringem Aufwand als Bauteile mit unterschiedlicher Kontur hergestellt werden, so daß eine kundenspezifische Anpassung auch an beengte Platzverhältnisse oder an unterschiedliche Verlegeabstände der Kühlrohre im Bereich des Deckenhohlraumes möglich ist.

Weitere Einzelheiten und Vorteile der Erfindung ergeben sich aus der nachfolgenden Beschreibung und der Zeichnung, die zwei Ausführungsbeispiele des erfindungsgemäßen Haltebügels für die Kühldecke schematisch veranschaulichen. In der Zeichnung zeigen:
- Fig. 1: eine teilweise geschnittene Ausschnittsdarstellung einer Kühldecke nach der Erfindung mit jeweiligen Haltebügeln einer ersten Ausführungsform in unterschiedlichen Montagephasen,
- Fig. 2: eine Perspektivdarstellung mehrerer aneinander abgestützter Haltebügel in einer Einbaulage ähnlich Fig. 1,
- Fig. 3: eine Perspektivdarstellung der Haltebügel mit Verbindungsstreben ähnlich Fig. 2 in einer zweiten Ausführungsform,
- Fig. 4: eine perspektivische Einzeldarstellung des Haltebügels in einer zweiten Ausführungsform, und
- Fig. 5: eine vergrößerte Einzeldarstellung des Haltebügels gem. Fig. 4 mit einem Zwischenträger im Bereich von Formausnehmungen für die Kühlrohre.

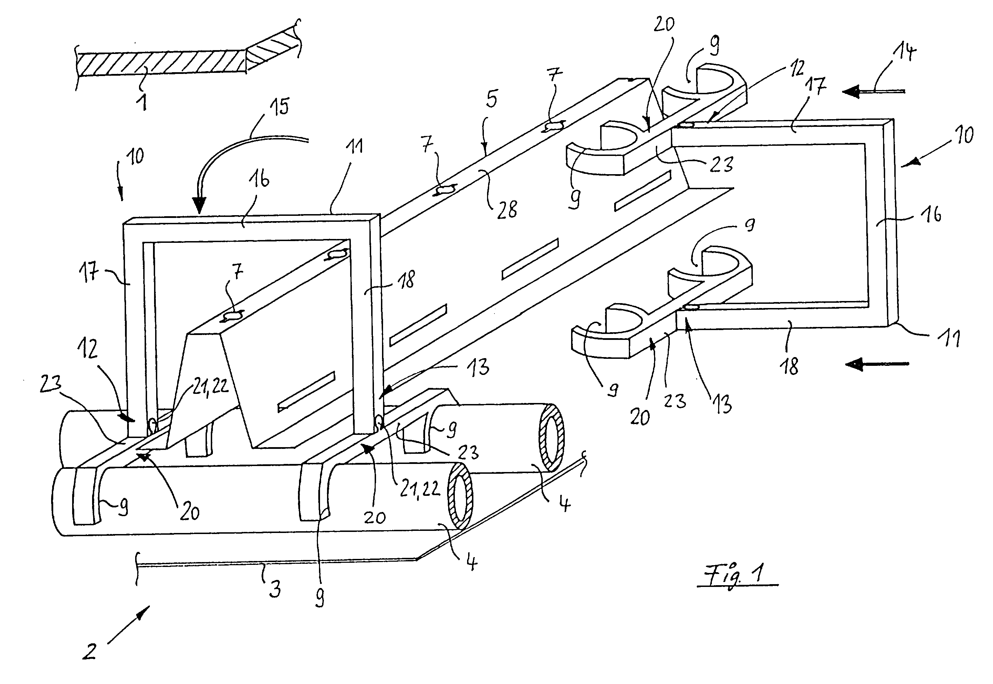

Die Darstellung gemäß Fig. 1 veranschaulicht in einer perspektivischen Ansicht auf eine Rohdecke 1 eine von dieser abgehängte, insgesamt mit 2 bezeichnete Kühldecke, deren als Paneele ausgebildete Deckenelemente 3 jeweilige Kühlrohre 4 eines Rohrsystems untergreifen und eine dieses optisch verdeckende Deckenverkleidung bilden. Mit der Rohdecke 1 sind das Deckenelement 3 und das Kühlrohr 4 in der Einbaulage über ein Halteglied 5 verbunden, wobei dessen Befestigungsöffnungen 7 von jeweiligen Verbindungsmitteln (nicht dargestellt) durchgriffen sind und damit das Halteglied 5 an der Rohdecke 1 über eine lösbare Verbindung festlegbar ist.

Zwischen dem Halteglied 5 und dem diesem jeweils zugeordneten Bereich des Kühlrohres 4 ist ein in einer Formausnehmung 9 das Kühlrohr 4 in Rastarretierung aufnehmendes und frei höhenbeweglich auf dem Halteglied 5 auflegbares Verbindungsglied 10 vorgesehen. In vorteilhafter Ausbildung ist das Verbindungsglied 10 als ein das Halteglied 5 frei übergreifender Haltebügel 11 ausgebildet, an dessen jeweiligen Endbereichen 12,13 zumindest ein Kühlrohr 4 unmittelbar in der Einbaulage über die Rastarretierung festgelegt werden kann (nicht dargestellt).

In Fig. 1 sind zwei Haltebügel 11 in unterschiedlichen Einbauphasen veranschaulicht, wobei jeweilige Bewegungsrichtungen (Pfeil 14 und 15) eine einfache und ohne zusätzliche Hilfsmittel realisierbare Montage der Haltebügel 11 veranschaulichen.

Der Haltebügel 11 ist dabei mit einer U-förmigen Kontur versehen, wobei zwei vom Basissteg 16 ausgehende, parallele Halteschenkel 17,18 in zweckmäßiger Ausführungsform in den jeweiligen Endbereichen 12,13 das Kühlrohr 4 in einem die Formausnehmung 9 aufweisenden Aufnahmeteil 20 aufnehmen, dessen jeweilige Montagestellung über unterschiedlich lang ausgebildete Halteschenkel 17,18 mit geringem Aufwand an unterschiedliche Installationsräume im Bereich der Rohdecke 1 anpaßbar ist.

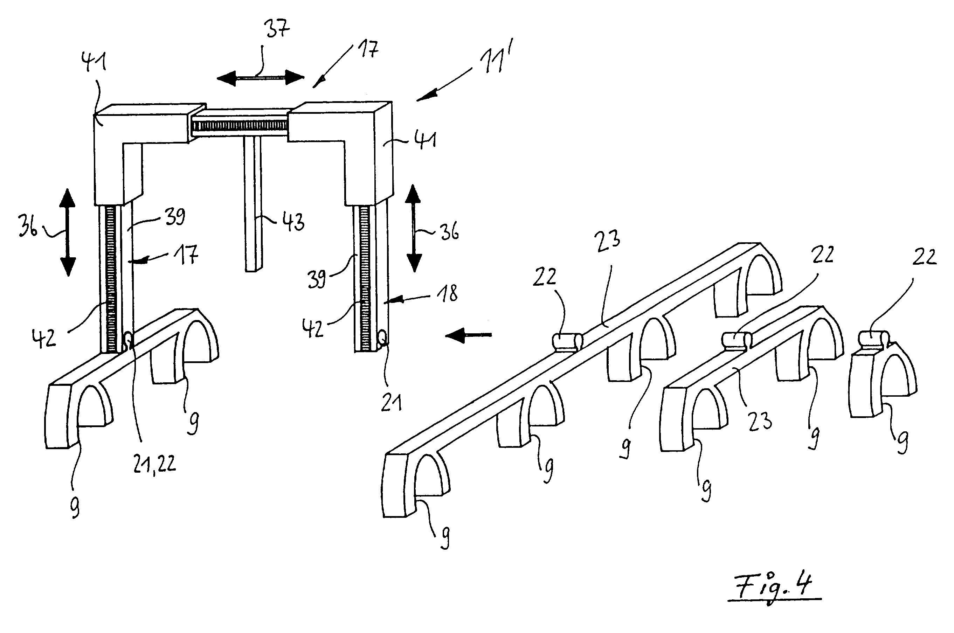

Die Halteschenkel 17,18 und das zugeordnete Aufnahmeteil 20 sind dabei in vorteilhafter Ausbildung über jeweilige Steckverbindungsmittel 21,22 (Fig. 4) verbindbar, die eine schnelle und an kundenspezifisch unterschiedliche Aufnahmeteile 20 anpaßbare Montage ermöglichen. Ebenso ist denkbar, anstelle der Steckverbindungsmittel jeweilige Rastverbinder, Druckglieder oder dgl. im Bedarfsfall auch leicht demontierbare Verbinder vorzusehen oder den Haltebügel 11 und Aufnahmeteil 20 mit einer einstückigen Verbindung auszubilden (nicht dargestellt).

Die Einzeldarstellung unterschiedlicher Aufnahmeteile 20 gemäß Fig. 4 verdeutlicht, daß die Aufnahmeteile 20 mit mehreren, über die jeweiligen Steckverbindungsmittel 21,22 mit den Halteschenkeln 17,18 verbindbaren Formausnehmungen 9 versehen sein können, wobei diese jeweils über einen Querholm 23 miteinander verbunden sind. Ebenso ist denkbar, die jeweiligen Endbereiche 12,13 der Halteschenkel 17,18 unmittelbar mit der Formausnehmung 9 (nicht dargestellt) zur Aufnahme des Kühlrohres 4 zu versehen und damit den Herstellungsaufwand zu verringern.

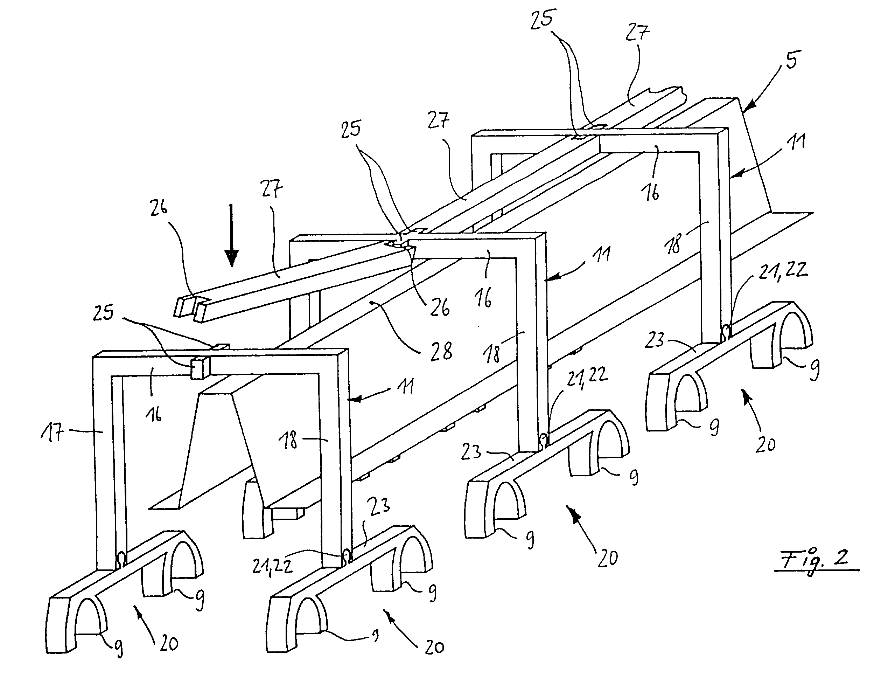

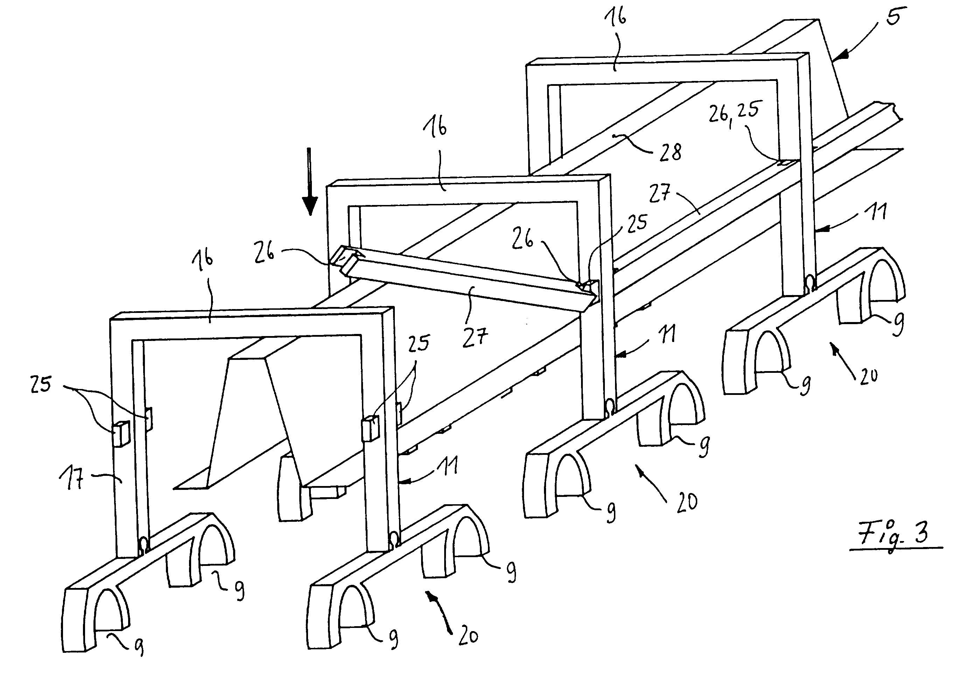

In Fig. 2 und Fig. 3 sind mehrere in der Montagestellung über dem Halteglied 5 positionierte Haltebügel 11 dargestellt, die mit jeweiligen Formansätzen 25 versehen und mittels einer eine entsprechende Gegenform 26 aufweisenden Verbindungsstrebe 27 miteinander verbunden sind. Damit können die Haltebügel 11 nach dem Einschwenken in die Montagestellung (Fig. 1) untereinander zu einem Tragsystem stabilisiert werden und bereits vor der Rastarretierung der Kühlrohre 4 in den Formausnehmungen 9 auf eine Auflagefläche 28 des Haltegliedes 5 stabil so aufgelegt werden, daß eine leicht zugängliche Montagestellung erreicht ist.

Die jeweiligen Formansätze 25 können dabei sowohl im Bereich des Basisstegs 16 (Fig. 2) als auch im Bereich der jeweiligen Halteschenkel 17,18 (Fig. 3) vorgesehen sein.

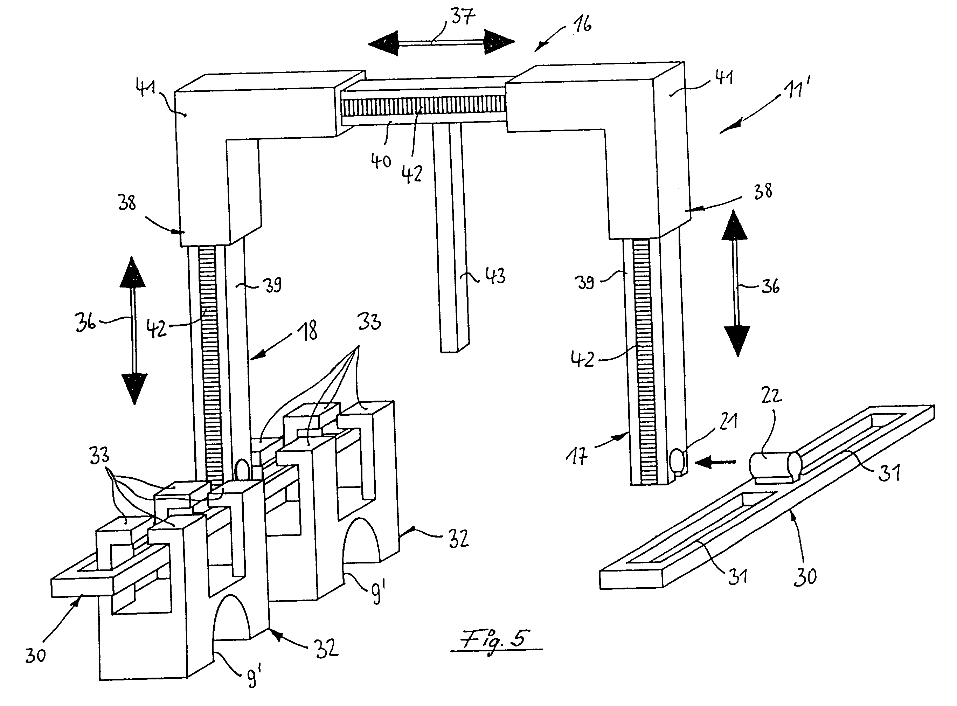

In einer Ausführungsform des Haltebügels 11' gemäß Fig. 5 ist dieser im Bereich der jeweiligen Halteschenkel 17,18 mit einem Zwischenträger 30 versehen, der im jeweiligen Endbereich 12,13 der Halteschenkel 17,18 über die Steckverbindungsmittel 21,22 mit dem Haltebügel 11' verbunden ist. Der Zwischenträger 30 weist dabei jeweilige Formausnehmungen oder Aufnahmeöffnungen 31 auf, in die ein die Kühlrohre 4 in seiner Formausnehmung 9' aufnehmendes Formteil 32 eingehangen ist.

In zweckmäßiger Ausführungsform ist das Formteil 32 mit einer parallelepipeden Grundform versehen und über jeweilige Hakenteile 33 mit dem Zwischenträger 30 verbunden. Ebenso ist denkbar, in die Aufnahmeöffnungen 31 des Zwischenträgers 30 beliebige andere Formteile (nicht dargestellt) einzuhängen und die Kühlrohre 4 damit in den entsprechenden Rasteingriff zu verbringen.

Der in Fig. 4 und Fig. 5 dargestellte Haltebügel 11' veranschaulicht dessen konstruktive Ausbildung in einer zweiten Ausführungsform, wobei dieser Haltebügel 11' zumindest bereichsweise als ein Teleskopteil 38 ausgebildet ist. Die mit jeweiligen Bewegungsrichtungen (Pfeile 36,37) veranschaulichten Verstellmöglichkeiten verdeutlichen die zweckmäßige Ausbildung des Haltebügels 11' als das sowohl im Bereich des Basisstegs als auch im Bereich der Halteschenkel 17,18 verlängerbares bzw. verkürzbares Teleskopteil 38.

Die Teleskopteile 38 sind dabei mit jeweiligen Ausziehteilen 39 im Bereich der Halteschenkel 17,18 bzw. einem Ausziehteil 40 im Bereich des Basisstegs 16 versehen, wobei diese jeweils stufenweise in jeweilige Grundkörper 41 einschiebbar bzw. aus diesen herausziehbar sind (Pfeile 36,37). In zweckmäßiger Ausführungsform sind die Ausziehteile 39,40 mit einer deren Auszugslänge bestimmenden und mit einem Rastglied (nicht dargestellt) innerhalb der Grundkörper 41 zusammenwirkenden Zahnleiste 42 versehen.

Ein derartiger Haltebügel 11' eröffnet weitere Möglichkeiten, bei beengten Platzverhältnissen oder unterschiedlichen Verlegeabständen im Bereich eines zwischen die Decke 1 und den Deckenelementen 3 gebildeten Deckenhohlraums eine kundenspezifische Anpassung der Haltebügel 11' zu erreichen und das Rohrsystem mit geringem Aufwand schnell zu montieren, danach die Deckenelemente 3 in ihre Einbaulage (Fig. 1) zu verbringen und auf diesen die Kühlrohre 4 so abzustützen, daß die Haltebügel 11,11' entlastet und über die Auflagefläche 28 des Haltegliedes 5 angehoben sind.

Die zweite Ausführungsform des Haltebügel 11' (Fig. 4, Fig. 5) ist mit einer in der Einbaulage auf das Halteglied 5 im Bereich der Auflagefäche 28 auflegbaren Vertikalstütze 43 versehen, die eine weitere Möglichkeit der Abstützung des Haltebügels 11 bzw. 11' bei der Montage verdeutlicht.

## Patentansprüche

1. Kühldecke zur Raumluftklimatisierung, mit einem von Kühlwasser durchströmten Rohrsystem, das zumindest bereichsweise zwischen der Decke (1) des Gebäudes und im Abstand unter dieser angeordneten Deckenelementen (3) vorgesehen und über ein die Deckenelemente (3) tragendes Halteglied (5) in der Einbaulage festgelegt ist, in der die einem Deckenelement (3) gegenüberliegenden Bereiche des Kühlrohrs (4) des Rohrsystems am Deckenelement (3) anliegen, wobei zwischen dem Halteglied (5) und dem diesem jeweils zugeordneten Bereich des Kühlrohrs (4) ein in einer Formausnehmung (9) das Kühlrohr (4) in Rastarretierung aufnehmendes und höhenbewegliches Verbindungsglied (10) vorgesehen ist, **dadurch gekennzeichnet,** daß das Verbindungsglied (10) als ein das Halteglied (5) frei übergreifender Haltebügel (11,11') ausgebildet und an dessen jeweiligen Endbereichen (12,13) zumindest ein Kühlrohr (4) über die Rastarretierung festlegbar ist.

2. Kühldecke nach Anspruch 1, dadurch gekennzeichnet, daß der Haltebügel (11,11') eine U-förmige Kontur aufweist und zwei vom Basissteg (16) des Haltebügels ausgehende, parallele Halteschenkel (17,18) endseitig das Kühlrohr (4) jeweils in einem die Formausnehmung (9) aufweisenden Aufnahmeteil (20) aufnehmen.

3. Kühldecke nach Anspruch 2, dadurch gekennzeichnet, daß die Halteschenkel (17,18) und das Aufnahmeteil (20) durch Steckverbindungsmittel (21,22) verbindbar sind.

4. Kühldecke nach Anspruch 2 oder 3, dadurch gekennzeichnet, daß das Aufnahmeteil (20) mehrere über einen das Steckverbindungsmittel (22) aufweisenden Querholm (23) verbundene Formausnehmungen (9) darbietet.

5. Kühldecke nach einem der Ansprüche 1 bis 4, dadurch gekennzeichnet, daß die Haltebügel (11,11') jeweils mit zumindest einem Formansatz (25) versehen und über diesen jeweils benachbarte Haltebügel (11) mittels einer eine entsprechende Gegenform (26) aufweisenden Verbindungsstrebe (27) aneinander abstützbar sind.

6. Kühldecke nach Anspruch 5, dadurch gekennzeichnet, daß die U-förmigen Haltebügel (11,11') im Bereich des Basisstegs (16) und/oder im Bereich der Halteschenkel (17,18) mit den Formansätzen (25) versehen sind.

7. Kühldecke nach einem der Ansprüche 1 bis 6, dadurch gekennzeichnet, daß die Halteschenkel (17,18) jeweils endseitig über die Steckverbindungsmittel (21,22) mit einem Zwischenträger (30) mit Aufnahmeöffnungen (31) verbunden sind, in die ein die Rohre (4) in seiner Formausnehmung (9') aufnehmendes Formteil (32) eingehangen ist.

8. Kühldecke nach Anspruch 7, dadurch gekennzeichnet, daß das Formteil (32) eine parallelepipede Grundform aufweist und über jeweilige Hakenteile (33) mit dem Zwischenträger (30) verbunden ist.

9. Kühldecke nach einem der Ansprüche 1 bis 8, dadurch gekennzeichnet, daß der Haltebügel (11') zumindest bereichsweise als Teleskopteil (38) ausgebildet ist.

10. Kühldecke nach Anspruch 9, dadurch gekennzeichnet, daß der Haltebügel (11') im Bereich des Basisstegs (16) und der Halteschenkel (17,18) jeweils als Teleskopteil (38) ausgebildet ist.

11. Kühldecke nach Anspruch 9 oder 10, dadurch gekennzeichnet, daß die Ausziehteile (39,40) des Teleskopteils stufenweise einschieb- bzw. herausziehbar sind.

12. Kühldecke nach einem der Ansprüche 9 bis 11, dadurch gekennzeichnet, daß die Ausziehteile (39,40) des Teleskopteils mit einer deren Auszugslänge bestimmenden und mit einem Rastglied zusammenwirkenden Zahnleiste (42) versehen sind.

13. Kühldecke nach einem der Ansprüche 1 bis 12, dadurch gekennzeichnet, daß der Haltebügel (11,11') eine in der Einbaulage auf das Halteglied (5) auflegbare Vertikalstütze (43) aufweist.

## Claims

1. A cooling ceiling for air conditioning a room with a system of pipes through which cooling water flows, the pipe system being provided at least in regions between the ceiling (1) of a building and ceiling elements (3) spaced below the ceiling and being fixed in the installed position by means of a holding element (5) supporting the ceiling elements (3), the portions of a cooling pipe (4) of the pipe system opposite a ceiling element (3) lying against said ceiling element (3) when in the installed position, a vertically movable connecting element (10), receiving the cooling pipe (4) snap-locked in a shaped recess (9), being provided between the holding element (5) and the respective portion of the cooling pipe (4) associated therewith, characterized in that said connecting element (10) is formed as a holding bracket (11, 11') freely/contactlessly embracing said holding element (10) and that at least one cooling pipe (4) may be fixed to the respective end portions (12, 13) of the connecting element by said snap-lock.

2. The cooling ceiling of claim 1, characterized in that said holding bracket (11, 11') is U-shaped and that the ends of two parallel holding legs (17, 18) extending from the base bar (16) of said holding bracket receive said cooling pipe (4) in a respective receiving element (20) provided with said shaped recess (9).

3. The cooling ceiling of claim 2, characterized in that said holding legs (17, 18) and said receiving element (20) are adapted to be connected by plug-in connecting means (21, 22).

4. The cooling ceiling of claim 2 or 3, characterized in that said receiving element (20) has a plurality of shaped recesses (9) connected by a transversal bar (23) provided with said plug-in connecting means (22).

5. The cooling ceiling of one of claims 1 to 4, characterized in that said holding brackets (11, 11') are each provided with at least one shaped stud (25), by which respective adjacent holding brackets (11) may be supported at each other through a connecting bar (27) having a corresponding complementary shape (26).

6. The cooling ceiling of claim 5, characterized in that said U-shaped holding brackets (11, 11') are provided with said shaped studs (25) in the region of said base bar (16) and/or in the region of said holding legs (17, 18).

7. The cooling ceiling of one of claims 1 to 6, characterized in that, through said plug-in connecting means (21, 22). said holding legs (17, 18) have their respective ends connected to an intermediate support (30) having receiving openings (31) from which is suspended a shaped part (32) receiving the pipes (4) in its shaped recess (9').

8. The cooling ceiling of claim 7, characterized in that said shaped part (32) has a parallelepiped basic shape and is connected to said intermediate support (30) by means of respective hook portions (33).

9. The cooling ceiling of one of claims 1 to 8, characterized in that said holding bracket (11') is formed as a telescopic element (38) at least in portions thereof.

10. The cooling ceiling of claim 9, characterized in that said holding bracket (11') is formed as a telescopic element (38) in the region of the base bar (16) and the holding legs (17, 18), respectively.

11. The cooling ceiling of claim 9 or 10, characterized in that the telescope portions (39, 40) of the telescopic member may be pushed in or pulled out gradually.

12. The cooling ceiling of one of claims 9 to 11, characterized in that the telescope portions (39, 40) of the telescopic member are provided with a toothed bar (42) defining their draw-out length and cooperating with a catch member.

13. The cooling ceiling of one of claims 1 to 12, characterized in that said holding bracket (11, 11') has a vertical support (43) adapted to be placed on said holding element (5) when in the installed position.

## Revendications

1. Plafond réfrigérant pour une installation de climatisation de l'air d'une pièce, comprenant un système de conduites, dans lequel circule de l'eau de refroidissement, qui est monté au moins en partie entre le plafond (1) du bâtiment et des éléments de plafond (3) disposés à une distance donnée sous ce dernier et qui est fixé dans sa position de montage sur un organe de support (5) portant les éléments de plafond (3), dans lequel les zones situées face à un élément de plafond (3) des conduites de refroidissement (4) du système de conduites sont disposées contre l'élément de plafond (3), un organe d'assemblage (10), mobile en hauteur et recevant chaque fois la conduite de refroidissement (4) dans une cavité profilée (9) pour former un système de blocage par enclenchement, étant prévu entre l'organe de support (5) et la zone de la conduite de refroidissement (4) correspondant audit organe de support, caractérisé en ce que l'organe d'assemblage (10) est conçu comme un étrier de retenue (11, 11') qui s'engage librement au-dessus de l'organe de support (5) et aux extrémités (12, 13) duquel peut être fixée au moins une conduite de refroidissement (4) par le système de blocage par enclenchement.

2. Plafond réfrigérant selon la revendication 1, caractérisé en ce que l'étrier de retenue (11, 11') présente un contour en forme de U, et deux branches de maintien (17, 18) parallèles, partant de la traverse de base (16) de l'étrier de retenue, sont destinées à recevoir sur leurs extrémités la conduite de refroidissement (4) dans une pièce de réception (20) comportant la cavité profilée (9).

3. Plafond réfrigérant selon la revendication 2, caractérisé en ce que les branches de maintien (17, 18) et la pièce de réception (20) peuvent être assemblées les unes aux autres par des organes d'assemblage par encastrement (21, 22).

4. Plafond réfrigérant selon l'une des revendications 2 ou 3, caractérisé en ce que la pièce de réception (20) comporte plusieurs cavités profilées (9) reliées par une barre (23) qui est munie de l'organe d'assemblage par encastrement (22).

5. Plafond réfrigérant selon l'une des revendications 1 à 4, caractérisé en ce que chaque étrier de retenue (11, 11') est muni d'au moins une saillie profilée (25), chaque étrier de retenue (11) pouvant s'appuyer par l'intermédiaire de cette dernière contre l'étrier de retenue voisin à l'aide d'une entretoise d'assemblage (27) ayant une forme complémentaire (26) correspondante.

6. Plafond réfrigérant selon la revendication 5, caractérisé en ce que les étriers de support (11, ll') en forme de U sont munis des saillies profilées (25) dans la zone de leur traverse de base (16) et/ou dans la zone des branches de maintien (17, 18).

7. Plafond réfrigérant selon l'une des revendications 1 à 6, caractérisé en ce que les branches de maintien (17, 18) sont assemblées chacune à leur extrémité, par l'intermédiaire des organes d'assemblage par encastrement (21, 22), à une traverse intermédiaire (30) munie d'orifices de réception (31), dans lesquels est suspendue une pièce profilée (32), destinée à recevoir les conduites (4) dans sa cavité profilée (9').

8. Plafond réfrigérant selon la revendication 7, caractérisé en ce que la pièce profilée (32) présente une forme de base parallélépipédique et est assemblée à la traverse intermédiaire (30) par l'intermédiaire de crochets (33) correspondants.

9. Plafond réfrigérant selon l'une des revendications 1 à 8, caractérisé en ce que l'étrier de retenue (11') est conçu au moins partiellement comme une pièce télescopique (38).

10. Plafond réfrigérant selon la revendication 9, caractérisé en ce que l'étrier de retenue (11') est conçu respectivement dans la zone de la traverse de base (16) et les branches de maintien (17, 18) comme une pièce télescopique (38).

11. Plafond réfrigérant selon l'une des revendications 9 ou 10, caractérisé en ce que les parties susceptibles de coulisser (39, 40) de la pièce télescopique peuvent coulisser par étapes l'une dans l'autre ou l'une hors de l'autre.

12. Plafond réfrigérant selon l'une des revendications 9 à 11, caractérisé en ce que les parties susceptibles de coulisser (39, 40) de la pièce télescopique sont munies d'une barre crantée (42) définissant la longueur de coulissement et agissant conjointement avec un organe de blocage.

13. Plafond réfrigérant selon l'une des revendications 1 à 12, caractérisé en ce que l'étrier de retenue (11, 11') est muni d'un support vertical (43) qui, en position de montage, peut être posé sur l'organe de support (5).
